# EUROPEAN PATENT APPLICATION

(11) **EP 1 707 041 A1**
(43) Date of publication of application: **04.10.2006**
(21) Application number: 06075732.5
(22) Date of filing: 29.03.2006
(51) Int. Cl.: A01B 45/02

(54) **Aeration device**

(30) Priority: 01.04.2005 NL 1028670
(71) Applicant: Redexim Handel-en Exploitatie Maatschappij B.V., 3702 AC Zeist (NL)
(72) Inventor:
(74) Representative: 't Jong, Bastiaan Jacob

(57) **Abstract**

The invention relates to a device for aerating soil, comprising a frame, moving means arranged on the frame for moving the device in a direction of movement over the ground, a drive shaft which is mounted on the frame and which can be coupled to drive means, a guiding system connected to the frame. This system comprises a number of arms (7,5,9) which are bearing mounted on the frame at respective rotation points (6,19) by means of an adjusting device. According to the invention the adjusting device is adapted to increase the distance between the first and second rotation point (6,19) substantially in a vertical direction.

## Description

The invention relates to a device for aerating soil, comprising:
- a frame
- moving means arranged on the frame for moving the device in a direction of movement over the ground,
- a drive shaft which is mounted on the frame and which can be coupled to drive means,
- a guiding system which is connected to the frame and coupled to the drive shaft, and which comprises at least a first arm provided with at least an aerating means, wherein the guiding system is adapted to cause the aerating means to perform a reciprocal movement in and out of the ground,
wherein the guiding system comprises a second and a third arm, wherein the first arm is bearing mounted on the second and third arms, wherein the second arm is bearing mounted on the frame at a first rotation point, and the third arm is bearing mounted on the frame by means of an adjusting device at a second rotation point, wherein the first and second rotation point are arranged substantially above each other in a vertical direction.

Such a device is for instance known from DE 43 33 310. The known device has a drive for the guiding system consisting of a number of arms, where an aerating means is arranged on one arm, wherein the rotation point of the second arm can be adjusted. A horizontal displacement is shown. This enables adjustment of the angle of the aerating means relative to the ground. This is for instance advantageous when the device also has a determined height

A pin is used as aerating means. This enables underground aeration. Little damage should occur on the surface during deep aeration with pins. This is a requirement for recreational fields such as for football or golf. The aeration pin is driven into the ground by means of the guiding frame, whereafter this latter makes a tilting movement, once again at least partially guided by the guiding frame. Due to this tilting the underlying soil layer is broken and aerated. This tilting should damage the surface as little as possible.

By means of the guiding system the angle at which the aeration pin is inserted into the ground is adjustable. This can be achieved in different ways. One example is that one of the arms of the guiding system can be lengthened or shortened. This necessitates the use of a spring mechanism in the guiding system which can absorb the decrease or increase in length of the guide rod caused by the movement of the aeration pin in the ground.

The aeration pin can further be driven into the ground counter to this spring pressure or spring force, without damage occurring on the top layer. Because the machine travels or is pulled forward and the tool holder of the aerating means connected to the first arm of the guiding system describes an arch, the aeration pin will want to push off on the surface and tilt. This tilting is a free movement. The movement is not actively imposed but is an interaction between the advancing travel speed, working depth, insertion angle and the arcuate movement of the tool holder. During this tilting the underlying soil is tilted upward, whereby the ground layer breaks and air can penetrate therein.

A problem of the above described prior art system is that the spring system works counter-productively as it applies an extra force on the rotation point, i.e. the surface of the soil for working, which should in fact be damaged as little as possible. The object of the invention is to provide a device wherein this problem is reduced.

According to the invention the aerating device is improved in that an adjusting device is provided which is adapted to increase the distance between the first and second rotation point substantially in a vertical direction. Surprisingly, an aerating device is hereby obtained which aerates actively, wherein the tilting movement of the aeration pin is performed actively by the guiding system. The forces at the tilting location, i.e. the point of insertion of the aerating device into the ground surface, are minimized or reversed compared to the prior art situation.

Surprisingly, the adjusting device which allows a displacement of the rotation point in vertical direction, but also in horizontal direction, makes it possible to find a rotation point for the third arm at which the tilting movement is actively performed. There is found to be a minimal point for the push-off forces of the aerating device on the insertion point. When the second rotation point is removed still further in substantially vertical direction from the first rotation point beyond this minimal point, an aerating device is obtained wherein insertion of the pins in the ground causes a tilting movement whereby the aerating device itself is accelerated in the direction of movement in which the aerating device is already advancing. A device pushing itself off is in fact obtained wherein no driving of the moving means is required, but wherein the propelling movement is obtained by the aerating means pushing off in the ground.

It is noted that this patent application relates to increasing the distance substantially in a vertical direction, wherein this adjustment is in any case present when the displacement in the vertical direction is greater than the displacement in the horizontal direction. According to the invention however, adjustments are also possible where the displacement in the vertical direction is smaller than the displacement in the horizontal direction in order to obtain the stated effect of the invention. This in fact depends greatly on the difference in length between the second and third arm.

The adjusting device according to one embodiment is adapted to adjust the respective rotation points substantially in a direction along the connecting line of the first and second rotation point. The rotation point at which active aeration takes place is hereby found in effective manner.

The adjusting device comprises an arm which is connected movably to the frame and with which the location of the rotation point of the first, but preferably the second, arm of the guiding system can be displaced. The movable arm or shaft of the adjusting device can be locked at its new position, thereby fixing the second rotation point. The skilled person will be familiar with different methods of embodying the adjusting mechanism.

This is preferably an adjusting device with which the distance between a number of rotation points of different guiding systems can be displaced simultaneously. Use is particularly made of a shaft or arm to which at least a number of first or second rotation points of adjacently arranged guiding systems are connected. This shaft can be adjusted. The adjusting device is adapted to displace the shaft, wherein the distance between the rotation points is increased. The shaft is preferably connected to the frame by means of two adjusting devices, preferably at the shaft extremities.

In a preferred embodiment the aerating device is provided with a number of guiding systems, wherein the first or second rotation points of a first part of these systems are connected to a first shaft connected to the frame, and the first or second rotation points of a second part of these systems are connected to a second shaft connected to the frame.

The adjusting devices are preferably connected fixedly to the frame. A robust assembly is hereby formed.

In a preferred embodiment the adjusting device comprises a so-called adjustment in a plane. The shaft which protrudes from the adjusting device and to which the different rotation points are connected is displaceable in the plane perpendicular to the shaft, i.e. in the plane of the arms of the guiding system, by means of the adjustment in a plane. This enables a displacement of the rotation point in the plane of the guiding system. An example of an adjustment in a plane is that an outer end of the arm is provided with a means which is displaceable relative to the frame and which can be fixed relative to the frame.

According to an embodiment, the adjusting device comprises a bushing which is provided with an enclosing means with which the first or second rotation point can be fixed in the bushing. A device is hereby obtained which can be manufactured in advantageous manner.

The first, second and third arm of the guiding system preferably form the sides of a substantially parallelogram figure.

In a preferred embodiment the second arm comprises two parts which are movable relative to each other. The second arm can hereby be lengthened or shortened. An adjustment can hereby be obtained of the starting position of the first arm provided with an aerating element. This insertion angle is for instance adjustable because the height adjustment of the aeration device according to the invention results in a tilting of the guiding system relative to the ground which is compensated by said lengthening or shortening of the second arm. A guiding frame is hereby obtained which is not rigid, whereby variations during the working, in particular aeration of the ground, can be compensated without this resulting in damage to the guiding system.

In the preferred embodiment the two parts are telescopic. The arms can hereby operate with the great forces which occur in an aerating device with a guiding system according to the invention.

The length of at least one arm of the guiding system is preferably adjustable. The angular adjustment can hereby be determined.

The guiding system preferably comprises a tensioning means such as a spring which is coupled to the first arm and the guiding system in order to bias the arm with the aerating means toward the first or second rotation point. The guiding system hereby still allows the arm with the aerating means to be able to yield. The spring means can be connected to the second arm or the third arm, or can be incorporated in the arm consisting of two parts.

According to a preferred embodiment, the device comprises drive means for the drive shaft. The device can hereby also become self-driving when the adjusting device is set to a point where active aeration occurs, whereby the device becomes self-propelling.

The invention will be further described on the basis of the accompanying figures, in which:
figure 1 shows a perspective view of an aerating device according to a first embodiment of the invention,
figure 2 shows a side view of a second embodiment of the aerating device according to the invention,
figure 3 is a schematic side view of the guiding system of a device according to the invention,
figure 4 shows a detail according to arrow IV in figure 3,
figure 5 shows a second view of the guiding system according to figure 2,
figure 6 shows a third view of the embodiment according to figure 2,
figures 7a-7e are schematic views of steps of a movement of the arms of an aerating device according to the invention,
figure 8 is a schematic view of the arms and adjustment of these arms according to the first embodiment.

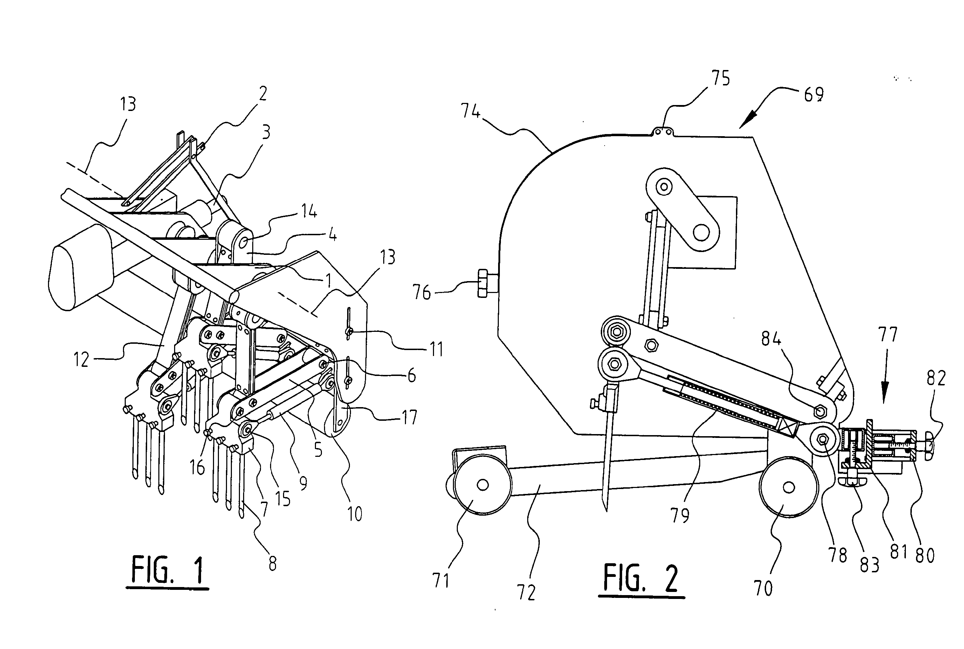

Figure 1 shows an aerating device with aerating tools, referred to below as aerating pins. The machine consists of a main frame 1 on which fixing eyes 2 are arranged to connect the machine to a propelling vehicle.

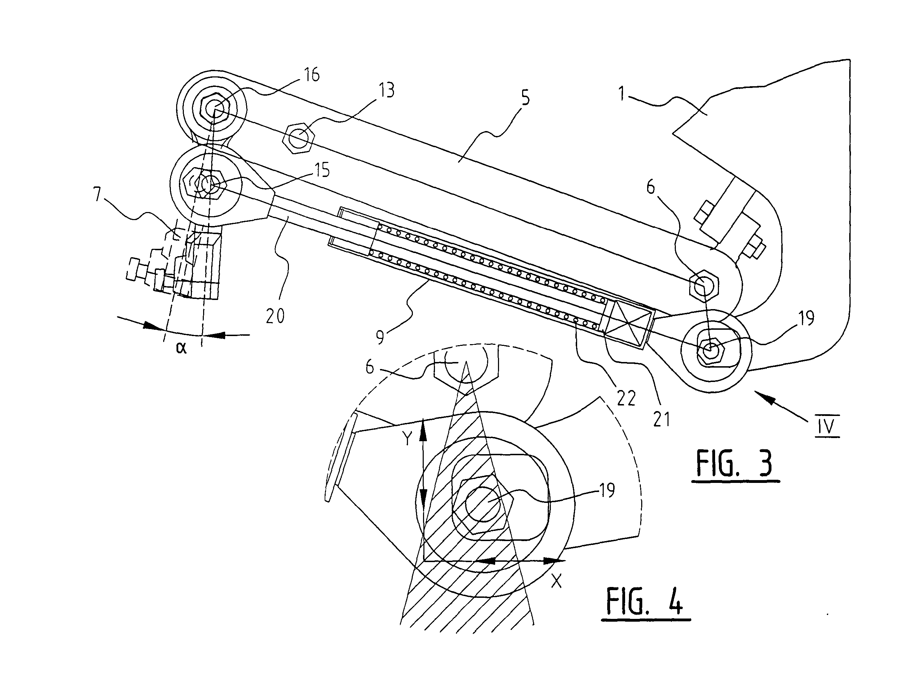

Crankshaft 4 is driven by drive shaft 3. The crankshaft will thus rotate around shaft 13. Connected to crankshaft 4 via a hinge 14 and a connecting rod 12 is a guiding system consisting of a first arm 7, a second arm 5 and a third arm 9. The guiding system will be further discussed below with reference to the side views of figures 3-6.

The first arm 7 is a tool holder in which aerating pins 8 are mounted. The tool holder is guided by the second and third guide arms 5, 9.

The guiding system comprises the two arms 5, 9. These are connected close to an outer end to tool holder 7 or first arm 7 by means of a bearing 15, 16. The second arm 5 is pivotally connected to connecting rod 12. Second arm 5 is fixedly connected to the frame at rotation point 6 by means of a bearing. Point 6 is the first rotation point of the guiding system with frame 1.

Tool holder 7 is guided by third arm 9 which is bearing mounted on one side to tool holder 7 and on another side is attached to main frame 1 via the adjusting device, which is further discussed below.

The whole supports with support roller 10 on the ground. The working depth is adjustable by means of adjusting the arm 17 which is mounted on frame 1 by means of locking means 11. A height adjustment is hereby possible.

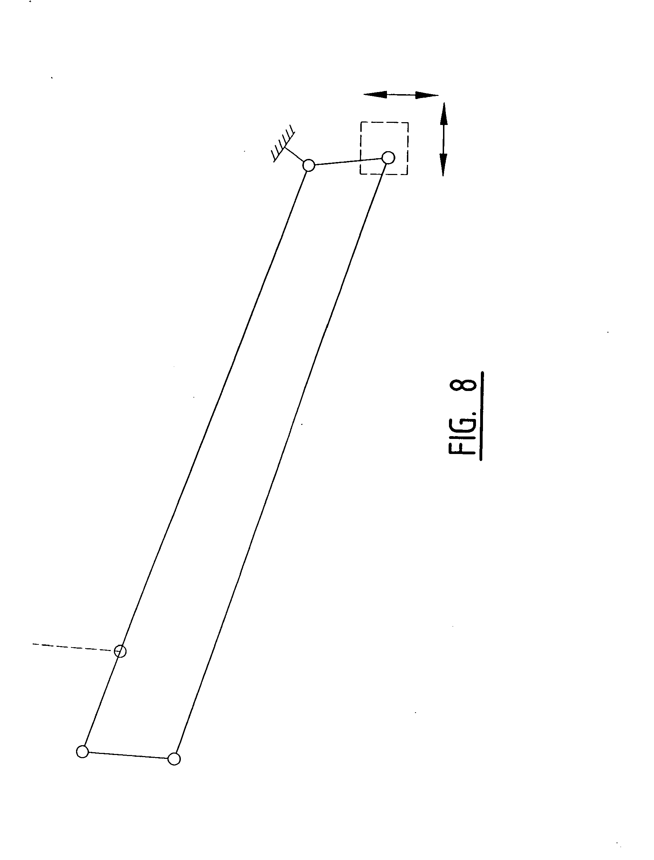

A plurality of guiding systems are connected to a frame 1. The arms of the guiding systems are arranged in a vertical plane along the direction of movement. The rotation points of the same arm in different guiding systems can be connected to each other by means of a shaft or arm. Movement of the arm in said plane results in displacement of the rotation points. It will be apparent to the skilled person how displacement of a rotation point of a first guiding system can be coupled to the same displacement of a rotation point of another guiding system. Figure 8 shows the arms of this device schematically.

Figure 2 shows another embodiment of the device of figure 1, wherein moving means 70 are shown and a moving means 71 connected via an arm 72 to the frame. Arm 72 is pivotally connected to the frame and can be adjusted. The device is hereby tilted and the working depth can be varied. Device 69 has a housing 73 connected fixedly to the frame and a cover 74 connected via a hinge 75 to the housing, which cover can be closed with a locking means 76.

The parallelogram construction of the device is clearly visible in the cross-section.

The adjusting mechanism according to the invention is designated overall with 77. This so-called polar coordinate adjustment system is connected to the frame and to the rotation point 78 of third arm 79. The other arms of the guiding frame are embodied in a manner corresponding to figures 1 and 2. By means of the adjusting means 80 and 81, which can be set in the respective X-direction and Y-direction by means of the rotatable adjusting means 82 and 83, the rotation point 78 can be moved relative to rotation point 84 of the second arm. The adjustment in the Y-direction with adjusting means 81 is essential here. From the parallelogram position shown in figure 2 the distance between rotation points 78 and 84 can be increased.

The X-Y adjusting means is connected fixedly to the frame. A robust device is hereby obtained which can absorb the great forces which occur during the ground working. The adjusting device connects the frame to a shaft which is in turn connected in each case to the same rotation point of different mutually adjacent guiding systems. The adjusting device has an adjusting mechanism as shown in figure 2, comprising a first adjusting means in a first direction and a second adjusting means in a second direction. Because adjustment is possible in two directions, this is an adjustment in a plane, preferably an adjustment in the plane of the guiding system.

Figure 3 shows the guiding system according to figure 1. Shown is the connecting point 18 of connecting rod 12 to second arm 5.

Third arm 9 consists of two parts 20, 21 engaging telescopically in each other, wherein a spring 22 is arranged between the parts. Arm 9 can be lengthened by means of the spring and the first arm with aerating means can rotate through an angle α, wherein the force of the spring must be overcome. This ensures that the system can be adapted to variations in the ground.

Third arm 9 has a rotation point 19 which forms the rotation point of this arm relative to frame 1.

Hinges 15, 16 and rotation points 6, 19 form a substantially parallelogram shape. The parallelogram shape is modified by lengthening or shortening the third arm 9. In addition, an adjusting device is present wherein the second rotation point 19 can be displaced. The adjusting device enables a displacement in the X-Y plane as shown in detail in figure 4, wherein X- and Y-direction indicate horizontal and vertical direction. The X-Y adjustment with the adjusting device has an order of magnitude of about 30 x 30 mm. Compared to the linear adjustment known from the prior art, considerably more positions become possible at which adjustment can take place.

A possible embodiment of the adjusting device with X-Y adjustment is a coordinate table or an adjustment with polar coordinates, wherein use is made of a radial and an angular adjustment in order to cover a determined plane.

An area is shown by means of hatching in figure 4 inside which the adjusting device according to the invention can operate and inside which the second rotation point 19 can be offset relative to the first rotation point 6. Even more positions are of course possible with the adjustment in a plane. Surprisingly however, the favourable rotation points lie within this hatched area.

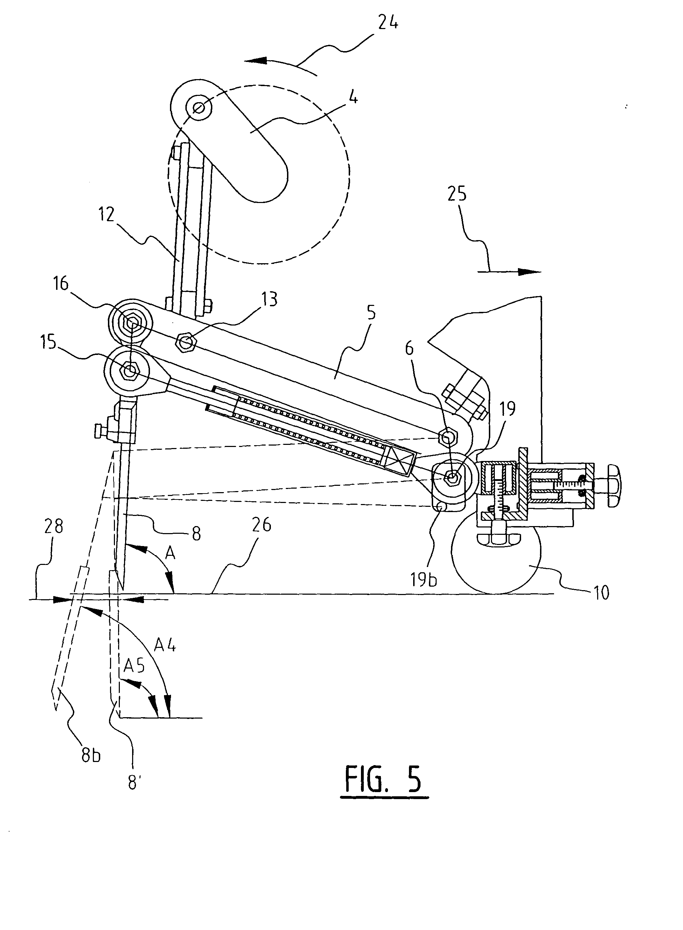

Figure 5 shows a following view of the device according to the embodiment of figure 2, wherein two positions are shown of the second rotation point 19 adjusted by means of the adjusting device. Two positions of rotation point 19 and 19b are shown in figure 3. The second rotation point 19 is displaced to the position 19b, wherein the rotation point is moved substantially vertically relative to rotation point 6, wherein the distance between the rotation points is changed. In this case the distance is increased. The starting angle A of aerating pin 8 is nevertheless not changed since rotation point 19b and rotation point 19 lie on the radius of a circle having rotation point 15 as centre. The insertion angle A is the same for both rotation points.

When the guiding system is moved to the position indicated with broken lines by means of crankshaft 4 which rotates as according to arrow 24, two different positions are obtained wherein it becomes apparent that the angle A4 differs from the angle A5, wherein the angle A5 is reached by the aerating pin when rotation takes place around rotation point 19b. This shows clearly that when device 1 has a forward speed as according to arrow 25, herein travelling over the ground surface 26 by means of moving means such as the adjusting roller 10, the aerating pin 8b guided by the guiding system with rotation point 19b makes a rearward movement, whereby device 1 is pushed integrally in the direction of movement 25. This is particularly the case when the insertion point 27 of aerating pin 8 relative to the ground does not move until aerating device 1 does so as a whole. This will be further described with reference to the following figure.

When the forward displacement according to speed 25 is greater than the distance 28 reached in the downward stroke of crankshaft 4 according to arrow 24, spring 20 will be slightly lengthened whereby the third arm is lengthened, whereby the aerating pin can still tilt.

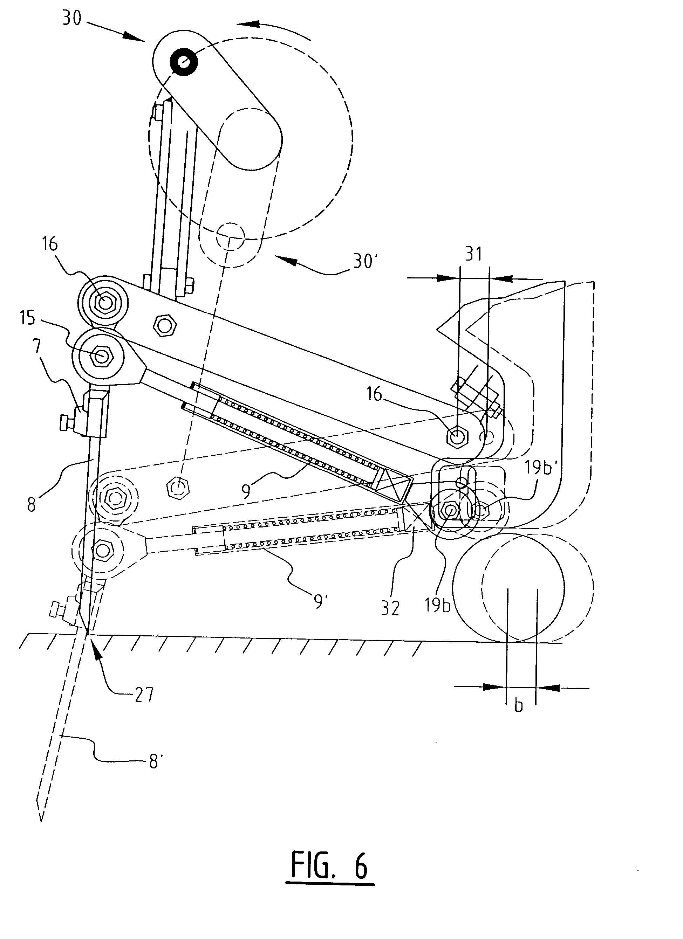

Figure 6 shows a situation wherein active aeration takes place, wherein insertion point 27 is used for insertion of aerating pin 8. Figure 6 shows two positions of device 1. The position shown with broken lines is in a position at a determined time T later than the starting position. The starting position is shown with the same reference numerals as in figures 2 and 3, while the broken line points are shown with an accent. In the time T crankshaft 4 makes a stroke from the position 30 to position 30'. In this period T the device advances over the distance 31. It can be seen that insertion point 27 of aerating pin 8 is the same as the point at which aerating pin 8' is situated a period T later, and that no movement of this point has therefore taken place. The aerating pin is now actually inserted into the ground without affecting the surface of the ground. No or few forces are exerted on the surface. Third arm 9 is shown with broken lines and has not been lengthened or shortened, or hardly so.

A stop 32 is arranged in arm 9. This is for instance a rubber component which can yield. The forces on the stop 32 can become very great, and the component can be replaced so that the forces can be better regulated. A heavy compression spring can for instance be used here, or a mechanical or hydraulic damper. It is also possible to couple or control the dampers of the individual aerating elements in parallel to each other. The forces can become great, for instance when a rock is located underground.

The adjustment of the length of one of the arms, in particular the third arm as shown, remains important when the guiding system moves further in accordance with the forcing movement of crankshaft 4 wherein the third arm can be lengthened so that the aerating pin then also does not contact the upper surface of ground 20, or hardly so, because it is moved out of the insertion hole. The spring provides for further tilting of aerating pin 8.

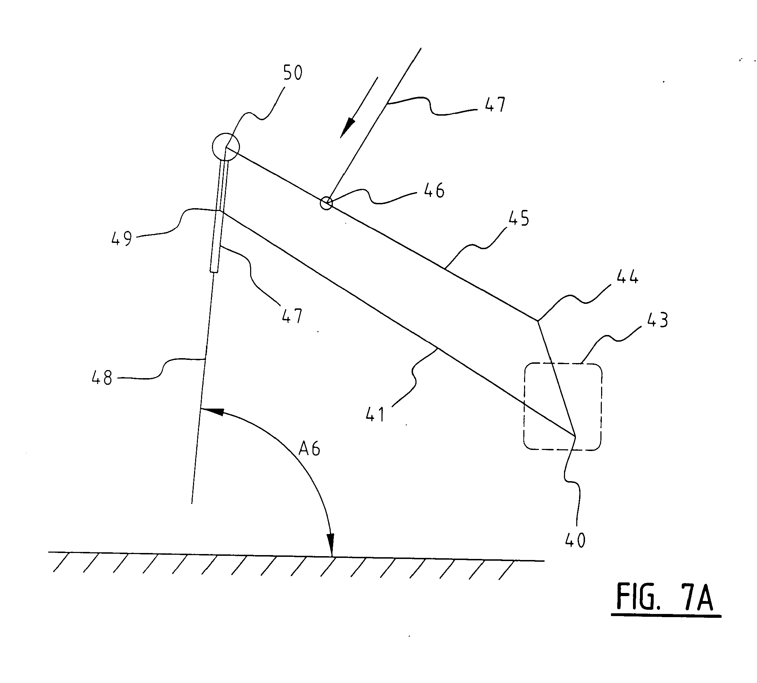

Figures 7A-7E show an example of a guiding system wherein the second rotation point 40 of third arm 41 is displaced vertically downward relative to the parallelogram starting position in the direction of ground 42 by means of schematically represented adjusting device 43 relative to the first rotation point 44, which is a bearing, which is fixedly connected to the frame (not shown) of second arm 45. Second arm 45 is connected by means of a bearing 46 to connecting rod 47 which is connected to a crankshaft (not shown). First arm 47 with the tool holder for aerating pin 48 is pivotally connected to the third and second arm close to the outer ends of these arms.

Third arm 41 is considerably lengthened compared to the earlier embodiment. Use can be made here of the telescopic property of this third arm.

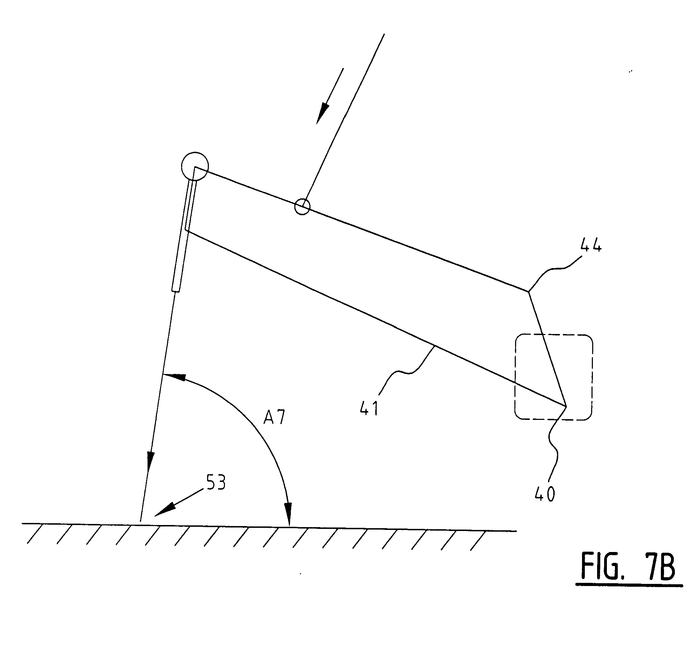

The insertion angle A6 is shown in figure 7A, this being the angle at which aerating pin 48 is placed into the ground 42. Figure 7B shows the moment of insertion, wherein the insertion angle A6 is to some extent changed to angle A7 as a result of the movement of the whole guiding system which is moved by connecting rod 47 around the pivot points 44 and 40.

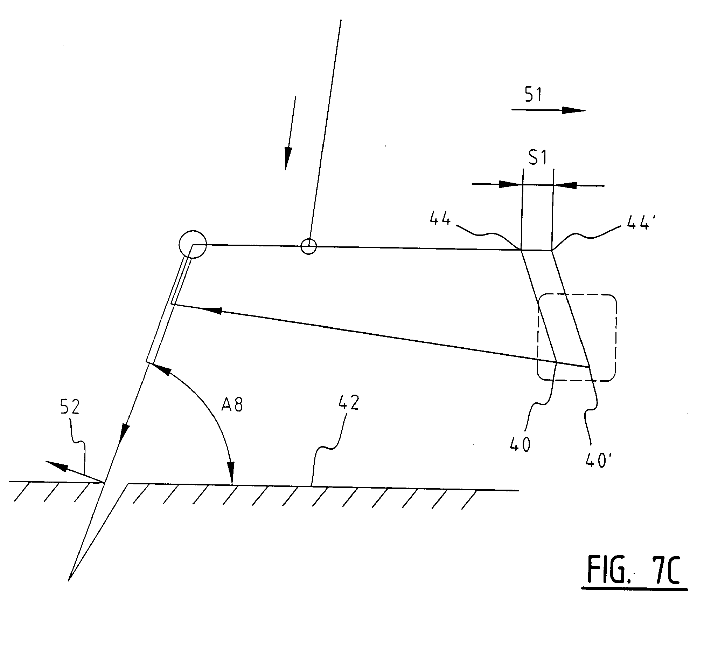

Figure 7A is the starting position. Shown in figure 7C are the positions 44 and 40, as well as 44' and 40', being the positions of the rotation points a time duration T later at which the device is displaced a distance S1 in the direction of movement of arrow 51. Figure 7C shows that the aerating pin exerts a force 52 on the ground 42. This pushing force generates an additional forward movement of the device.

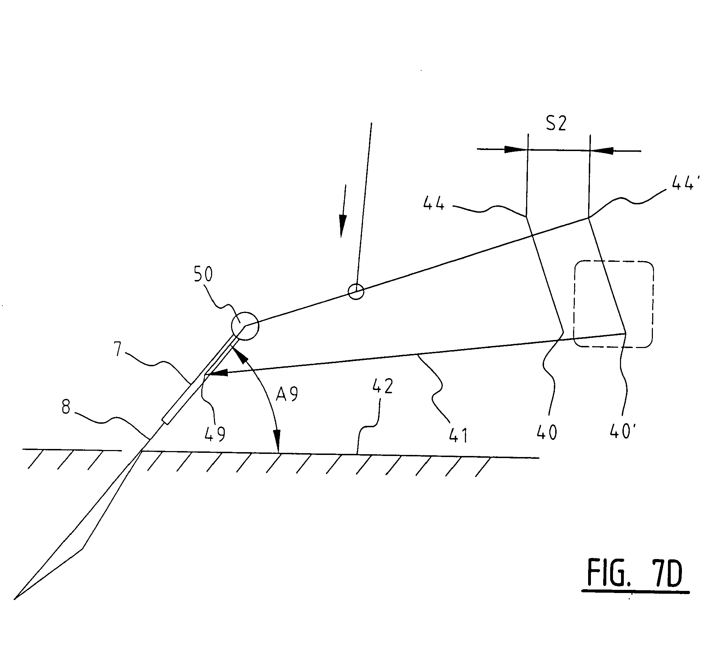

Figure 7D shows the situation in which the device is advanced a distance S2 and wherein the connecting rod is moved further by the crankshaft. Aerating pin 8 on first arm 7 makes an angle A9 with ground 42. Third arm 9 still has substantially the same length. In some cases a force is even exerted on stop 32.

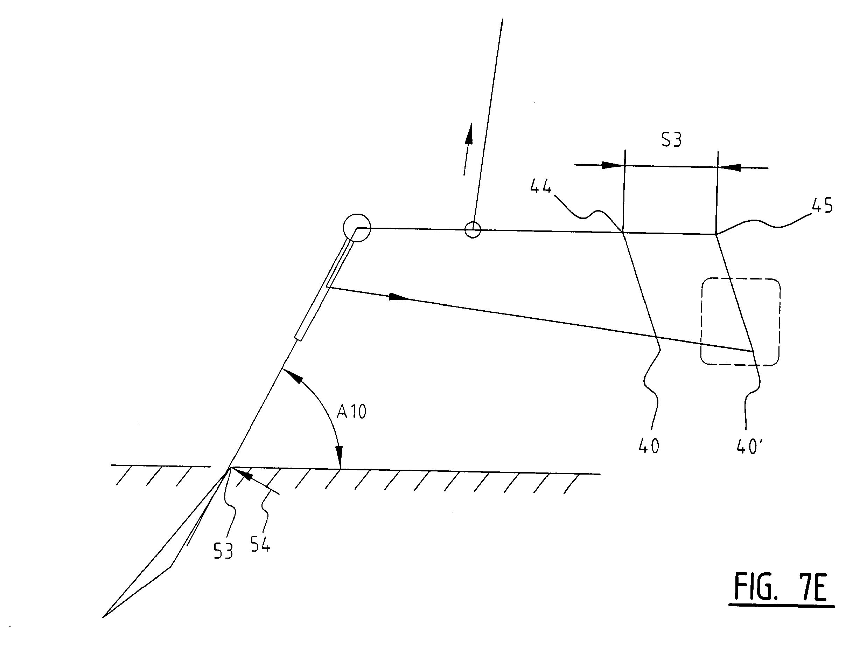

Moving even further, wherein a distance S3 is covered as shown in figure 7E, results in movement of aerating pin 8 out of the ground. Second arm 9 is now lengthened, wherein the spring is stretched. It is possible here that angle A10 is achieved, wherein a force is exerted on the insertion point 53 as according to arrow 54 whereby the tip of the aerating pin moves therealong.

The skilled person will be familiar with other embodiments of the adjusting device which can be connected to the frame.

## Claims

1. Device for aerating soil, comprising:
- a frame
- moving means arranged on the frame for moving the device in a direction of movement over the ground,
- a drive shaft which is mounted on the frame and which can be coupled to drive means,
- a guiding system which is connected to the frame and coupled to the drive shaft, and which comprises at least a first arm provided with at least an aerating means, wherein the guiding system is adapted to cause the aerating means to perform a reciprocal movement in and out of the ground,
wherein the guiding system comprises a second and a third arm, wherein the first arm is bearing mounted on the second and third arms, wherein the second arm is bearing mounted on the frame at a first rotation point, and the third arm is bearing mounted on the frame by means of an adjusting device at a second rotation point, wherein the first and second rotation point are arranged substantially above each other in a vertical direction,
**characterized in that**
the adjusting device is adapted to increase the distance between the first and second rotation point substantially in a vertical direction.

2. Device as claimed in claim 1, **characterized in that** the adjusting device is an adjustment substantially in a direction along the connecting line of the first and second rotation point.

3. Device as claimed in claim 1 or 2, **characterized in that** the adjusting device is a bushing provided with an enclosing means for fixing the first or second rotation point in the bushing.

4. Device as claimed in any of the claims 1-3, **characterized in that** the second arm comprises two parts which are movable relative to each other.

5. Device as claimed in claim 4, **characterized in that** the two parts are telescopic parts.

6. Device as claimed in claim 4 or 5, **characterized in that** the length of the arm is adjustable.

7. Device as claimed in any of the claims 1-6, **characterized in that** the guiding system comprises a tensioning means coupled to the first arm and the guiding system in order to bias the outer end with the aerating means on the first arm toward the first or second rotation point.

8. Device as claimed in any of the claims 1-7, **characterized in that** the device comprises drive means for the drive shaft.

9. Device as claimed in any of the claims 1-7, **characterized in that** the first, second and third arm of the guiding system form the sides of a substantially parallelogram figure.
